# EUROPÄISCHE PATENTSCHRIFT

(11) **EP 1 290 362 B1**
(45) Veröffentlichungstag und Bekanntmachung des Hinweises auf die Patenterteilung: **27.08.2003**
(21) Anmeldenummer: 01960283.8
(22) Anmeldetag: 08.06.2001
(51) Int. Cl.: F16H 61/02, F16H 61/16

(54) **ELEKTRO-PNEUMATISCHE SCHALTEINHEIT**
ELECTRO-PNEUMATIC SWITCH UNIT
UNITE DE COMMUTATION ELECTRO-PNEUMATIQUE

(30) Priorität: 15.06.2000 DE 10029497
(43) Veröffentlichungstag der Anmeldung: 12.03.2003
(73) Patentinhaber: ZF FRIEDRICHSHAFEN Aktiengesellschaft, 88038 Friedrichshafen (DE)
(72) Erfinder: BIRK, Reinhard, 88142 Wasserburg (DE); PFANNKUCHEN, August, 88046 Friedrichshafen (DE); EISELE, Markus, 88048 Friedrichshafen (DE); KOWALSKI, Peter, 88074 Meckenbeuren (DE); KLAUSMANN, Karlheinz, 88074 Meckenbeuren (DE)
(86) Internationale Anmeldenummer: EP0106499
(87) Internationale Veröffentlichungsnummer: WO01096764

(56) Entgegenhaltungen:
- EP-A- 0 547 829
- DE-A- 2 447 860
- US-A- 4 719 812
- US-A- 5 845 544
- US-A- 6 092 433

## Beschreibung

Die Erfindung betrifft eine elektro-pneumatische Schalteinheit nach dem Oberbegriff des Anspruchs 1.

Getriebe von größeren Nutzfahrzeugen sind in einen Hauptgetriebeteil, ein Splitgruppengetriebe und ein Bereichsgruppengetriebe aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Zur Steuerung von heute üblichen Kraftfahrzeuggetrieben werden in zunehmendem Maße elektronische Anordnungen vorgesehen. Diese Anordnungen dienen, neben anderen Zwecken, auch der Verhinderung von Schaltungen im Getriebe, die auf Grund sonstiger Bedingungen, wie insbesondere zu hoher Fahrzeuggeschwindigkeit bezogen auf den zu schalten beabsichtigten Gang, nicht zulässig sind.

Eine derartige pneumatische Schalteinrichtung mit Schutzmechanismen gegen falsches Betätigen ist beispielhaft aus der Deutschen Offenlegungsschrift 2 447 860, die als nächstliegender Stand der Technik angesehen wird, bekannt geworden. Die beschriebene Einrichtung ist mit ihren verschiedenen Elementen aufgelöst am gesamten Getriebe verteilt vorgesehen, so daß zwischen den einzelnen pneumatischen Elementen aufwendig verzweigte Luftleitungen notwendig sind und eine Vielzahl elektrischer Leitungen von einzelnen Elementen zur elektronischen Steuereinrichtung gelegt werden müssen. Die Auslösung der pneumatischen Schaltung eines Gruppengetriebes wird durch ein pneumatisches Ventil am Schalthebel durchgeführt.

Der vorliegenden Erfindung liegt die Aufgabe zugrunde, eine pneumatische Schalteinrichtung zu schaffen, die eine vereinfachte Anordnung am Getriebe ermöglicht.

Die Aufgabe wird gelöst mit den Merkmalen des Anspruchs 1. Ausgestaltungen sind Gegenstand von Unteransprüchen.

Erfindungsgemäß wird vorgeschlagen, bei einer elektropneumatischen Schalteinheit für ein Fahrzeuggetriebe, das ein über Ventile pneumatisch geschaltetes Splitgruppengetriebe und ein über Ventile pneumatisch geschaltetes Bereichsgruppengetriebe aufweist, deren Schaltungen manuell vom Fahrzeugführer an einem Schalthebel vorwählbar sind, und das mit einer Sperreinrichtung zur mechanischen Unterbindung der manuellen Schaltung nicht zulässiger Übersetzungsverhältnisse des Fahrzeuggetriebes versehen ist, und das weiterhin eine Sperreinrichtung zur Unterbindung der pneumatischen Schaltung nicht zulässiger Übersetzungsverhältnisse des Fahrzeuggetriebes und eine elektronische Steuereinrichtung aufweist, die Ventile des Splitgruppengetriebes und die Ventile des Bereichsgruppengetriebes als elektromagnetisch betätigte Pneumatikventile vorzusehen, die in einem gemeinsamen Gehäuse angeordnet sind, die durch elektrische Schalter am Schalthebel vorgewählt werden, die mit der Steuereinrichtung verbunden sind und die durch Signale der elektronischen Steuereinrichtung betätigt werden. In einer vorteilhaften Ausgestaltung ist die Sperreinrichtung zur Unterbindung der pneumatischen Schaltung von nicht zulässigen Übersetzungsverhältnissen mit in dem gemeinsamen Gehäuse integriert angeordnet. In einer weiteren vorteilhaften Ausgestaltung ist auch die Sperreinrichtung zur mechanischen Unterbindung der manuellen Schaltung nicht zulässiger Übersetzungsverhältnisse in dem gemeinsamen Gehäuse integriert. In einer vorteilhaften Ausgestaltung sind Sensoren zur Aufnahme der Neutralstellung des manuell betätigbaren mechanischen Teils der Schaltung, Sensoren zur Feststellung des Kupplungsverstellweges der zwischen der Antriebsmaschine des Fahrzeuges und dem Getriebe angeordneten Kupplung, Sensoren zu Feststellung der Drehzahlen der Antriebsmaschine und der Geschwindigkeit des Fahrzeugs und Sensoren zur Feststellung der Auslösung einer pneumatischen Schaltung von Splitgruppengetriebe oder Bereichsgruppengetriebe vorgesehen, deren Signale an die elektronische Steuereinrichtung übertragen werden. Die elektronische Steuereinrichtung ist in einer Ausgestaltung in das gemeinsame Gehäuse integriert und in einer anderen Ausgestaltung Bestandteil eines Fahrzeugleitrechnersystems, das für das ganze Fahrzeug zuständig ist. Eine Ausführung zeigt das gemeinsame Gehäuse mit nur einem verbliebenen Pneumatikanschluß und einem elektrischen Steckeranschluß.

Die Erfindung wird anhand einer Zeichnung näher erläutert.

Es zeigen:
- Fig. 1: eine schematische Darstellung mit Anordnung des Getriebes;
- Fig. 2: einen typischen Schaltgriff mit Schaltbild;
- Fig. 3: eine erste Ausgestaltung der Schalteinheit mit Kupplungsauslöseventil;
- Fig. 4: eine zweite Ausgestaltung der Schalteinheit mit Kupplungsauslöseschalter;
- Fig. 5: eine erweiterte Ausgestaltung nach Fig. 4;
- Fig. 6: eine Schalteinheit mit Anbildung an Fahrzeugleitrechner;
- Fig. 7: einen ersten Aufbau des Ventilblocks und
- Fig. 8: einen zweiten Aufbau des Ventilblocks.

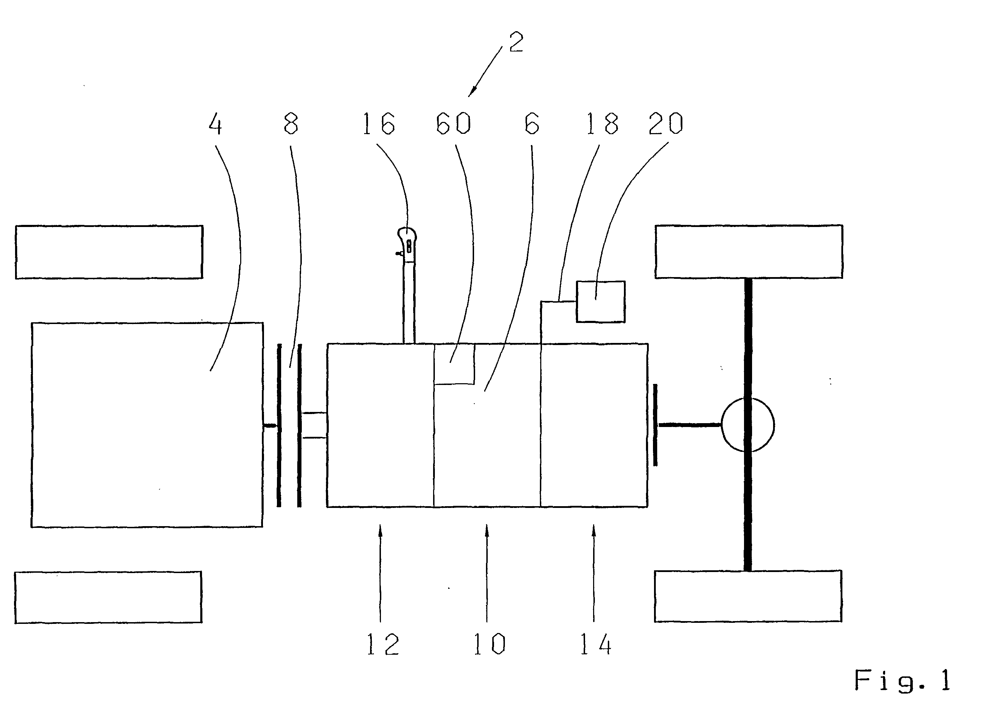

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Der Hauptgetriebeteil 10 wird manuell durch den Fahrzeugführer über einen Schalthebel 16 geschaltet. Das Getriebe 6 ist über Verbindungsleitungen 18 mit einer elektronischen Steuereinrichtung 20 verbunden.

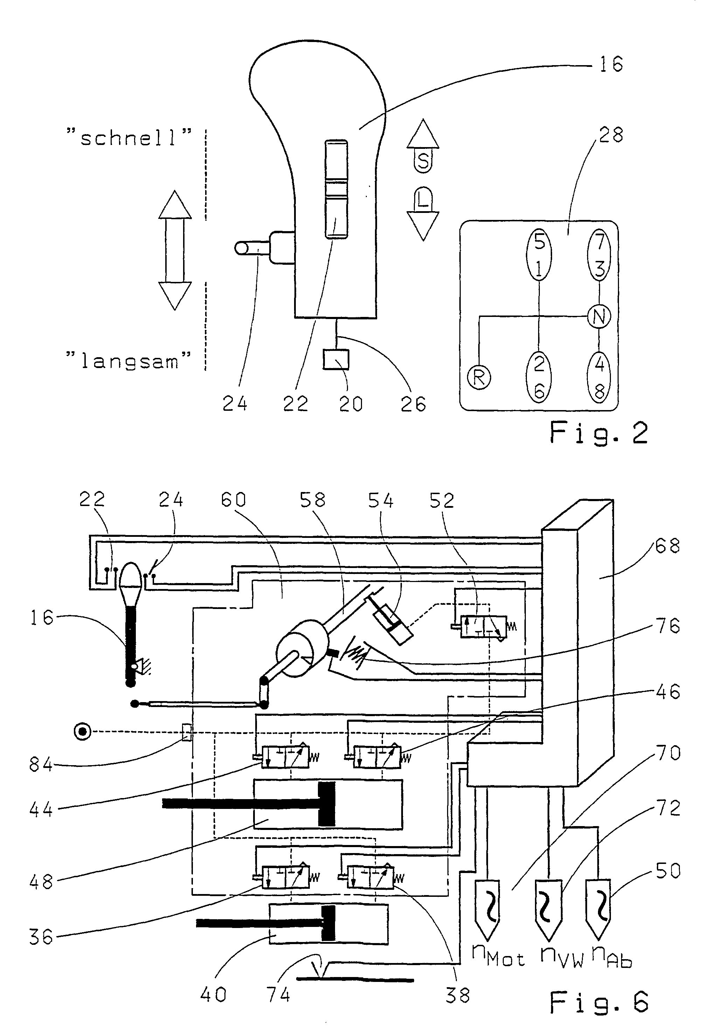

Die Fig. 2 zeigt einen beispielhaften Schalthebel 16 in einer vergrößerten Darstellung für ein Schaltbild 28, das als "Überlagertes-H" bezeichnet wird. Seitlich am Schalthebel 16 ist ein Kippschalter 22 zur Vorwahl der Schaltung des Splitgruppengetriebes 12 angeordnet. An der Vorderseite des Schalthebels 16 ist ein weiterer Kippschalter 24 vorgesehen, über den das Bereichsgruppengetriebe 14 geschaltet wird. Bei beiden Kippschaltern 22, 24 handelt es sich um elektrische Schalter, die über eine elektrische Verbindungsleitung 26 mit der Steuereinrichtung 20 verbunden sind. Bei einer Schaltung mit einem Schaltbild 28 ist in den Vorwärtsgängen jede Endstellung des Schalthebels 16 zwei Übersetzungsstufen zugeordnet, die sich jeweils um den Übersetzungssprung des Bereichsgruppengetriebes 14 unterscheiden. Bei der Kipphebelstellung "langsam" sind die Übersetzungsverhältnisse eins bis vier und der Rückwärtsgang geschaltet, bei Kipphebelstellung "schnell" sind die Gänge fünf bis acht geschaltet. Die Neutralstellung des Hauptgetriebeteils 10 befindet sich in der Gasse zwischen den Übersetzungsverhältnissen drei und vier bzw. sieben und acht.
Den Wechsel des Bereichsgruppengetriebes 14 muß der Fahrzeugführer mittels des Kippschalters 24 am Schalthebel 16 vorwählen. Der Wechsel wird ausgeführt, sobald im Hauptgetriebeteil 10 manuell die Neutralstellung eingelegt wird.

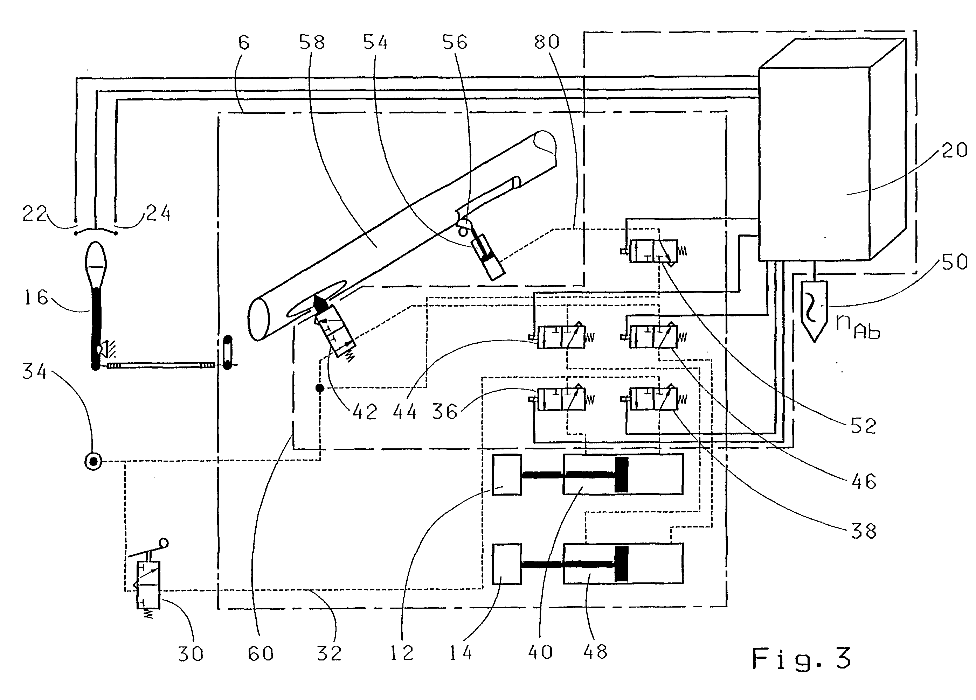

Das Splitgruppengetriebe 12 wird in den Positionen "L" oder "S" mit dem Kippschalter 22 seitlich am Schalthebel 16 vorgewählt und durch die Betätigung der Kupplung 8 geschaltet. Dazu zeigt die Fig. 3 ein pneumatisches Kupplungsauslöseventil 30, das in einer Leitung 32 zwischen einem Luftvorrat 34 und zwei elektropneumatischen 3/2-Wege-Ventilen 36 und 38 angeordnet ist. Das Kupplungsauslöseventil 30 läßt nur Luft zu den Ventilen 36 und 38 zu, wenn das Kupplungspedal betätigt wird. Die Ventile 36 und 38 sind mit der elektronischen Steuereinrichtung 20 verbunden und werden in Abhängigkeit der Schalterstellung des Kippschalters 22 am Schalthebel 16 angesteuert. Bei getretenem Kupplungspedal wird entweder Luft in die linke oder in die rechte Kammer des Schaltzylinders 40 des Splitgruppengetriebes 12 eingelassen, wobei dann die jeweils andere Kammer über die Ventile 36 bzw. 38 entlüftet wird.

Wie bereits ausgeführt muß der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebeteil 10 manuell die Neutralstellung eingelegt wird. In der Neutralstellung gibt ein mechanisch an die Schaltbewegung gekoppeltes Hauptabschaltventil 42 die Luft vom Luftvorrat 34 frei zu zwei elektropneumatischen 3/2-Wege-Ventilen 44 und 46. Die Ventile 44 und 46 sind mit der elektronischen Steuereinrichtung 20 verbunden und werden in Abhängigkeit der Schalterstellung des Kippschalters 24 am Schalthebel 16 angesteuert. Bei Erkennen der Neutrallage durch das Hauptabschaltventil 42 wird über das jeweils angesteuerte Ventil 44 oder 46 entweder Luft in die linke oder in die rechte Kammer des Schaltzylinders 48 des Bereichsgruppengetriebes 14 eingelassen, wobei dann die jeweils andere Kammer über das nicht angesteuerte Ventil 46 bzw. 44 entlüftet wird.

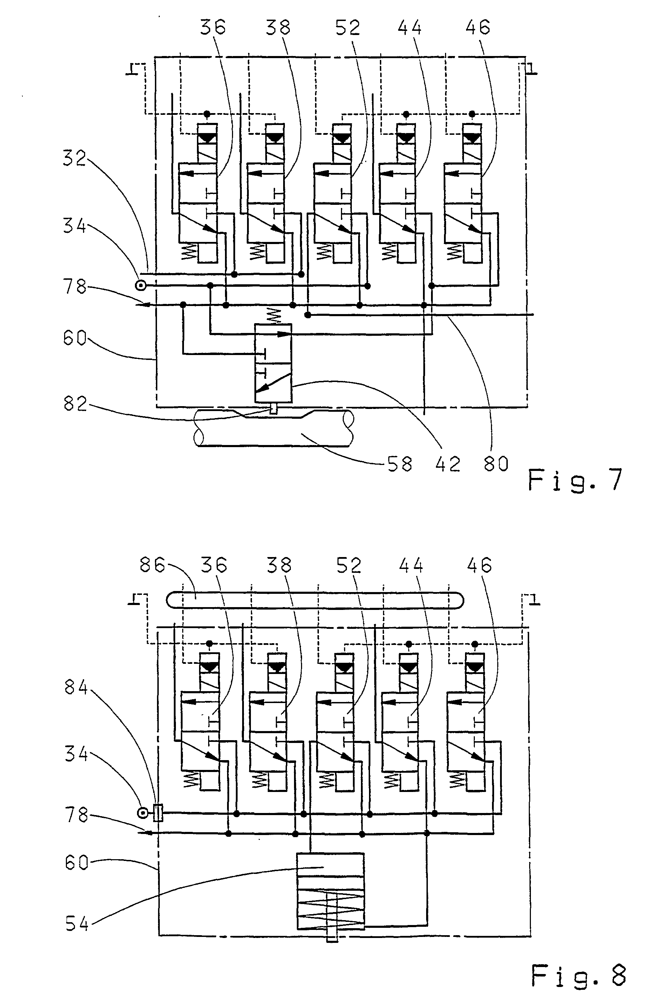

Um Fehlschaltungen zu vermeiden, müssen in der Schalteinrichtung zusätzliche Absicherungen getroffen werden. Dazu ist ein Gassensperrzylinder 54 vorgesehen, der vorzugsweise in der langsamen Übersetzungsstufe des Bereichsgruppengetriebes oberhalb einer bestimmten Abtriebsdrehzahl des Getriebes 6 das Schalten von der rechten Schaltgasse des Schaltbildes 28 in die linke Schaltgasse verhindert, d.h. das Schalten von der dritten oder vierten Übersetzungsstufe in die erste oder zweite Übersetzungsstufe wird verhindert. Dies soll den Fahrzeugführer davor bewahren, irrtümlich in die erste statt in die fünfte Übersetzungsstufe zu schalten, wenn er vergessen hat, mit dem Kippschalter 24 die schnelle Übersetzung in dem Bereichsgruppengetriebe vorzuwählen. In der schnellen Übersetzungsstufe des Bereichsgruppengetriebes kann die selbe Einrichtung dazu verwendet werden, Schaltungen von der achten in die fünfte Übersetzungsstufe zu verhindern. Die Abtriebsdrehzahl des Getriebes 6 wird von einem Sensor 50 erfaßt und als Signal an die elektronische Steuereinrichtung 20 weitergegeben. Die Steuereinrichtung 20 gibt bei zu hoher Abtriebsdrehzahl ein Signal an ein elektropneumatisches 3/2-Wege-Ventil 52 ab, das Luft aus dem Luftvorrat 34 über die Leitung 80 zu dem Gassensperrzylinder 54 gelangen läßt, dessen Stößel über einen Umlenkhebel 56 in die Schaltwelle 58 eingreift und diese in Richtung der rechten Schaltgasse des Schaltbildes 28 drückt. Diese Anordnung ist vom Fahrzeugführer mit einem erhöhten Kraftaufwand überdrückbar und erlaubt somit in Extremsituationen das Schalten der Übersetzungsstufen in der linken Schaltgasse des Schaltbildes 28. Wahlweise ist eine nicht überdrückbare Ausführung der Gassensperre einsetzbar, wie sie in der Fig. 6 dargestellt ist. Der Stößel des Gassensperrzylinders 54 greift dann direkt radial in eine Aussparung an der Schaltwelle 58 ein und arretiert die Schaltwelle 58 in Wählrichtung.

Eine Gruppensperre unterdrückt oberhalb einer vorgegebenen Fahrzeuggeschwindigkeit das Schalten des Bereichsgruppengetriebes 14 in die langsame Übersetzung und schützt sowohl die Synchronisierung des Bereichsgruppengetriebes 14 als auch die Synchronisierungen des Hauptgetriebeteils 10. Die Fahrzeuggeschwindigkeit wird über den Sensor 50 entsprechend der Getriebeabtriebsdrehzahl erfaßt und als Signal an die Steuereinrichtung 20 weitergegeben. Die Steuereinrichtung 20 steuert in Abhängigkeit dieses Signals die Ventile 36 bzw. 38 an und läßt ein Schalten in die langsame Übersetzung nur bei Vorliegen entsprechender zulässiger Signale zu.
Die Ventile 36, 38, 42, 44, 46 und 52 sind gemeinsam in einem Ventilblock 60 als einem gemeinsamen Gehäuse untergebracht, der unmittelbar an die Schaltwelle 58 des Getriebes 6 montiert wird. Dadurch ergibt sich eine kompakte Einheit eines Ventilblocks 60, der am Getriebe 6 angeordnet ist (Fig. 1). Durch die geringen Leitungslängen zwischen den einzelnen Ventilen ergeben sich vorteilhaft kurze Reaktionszeiten und Schaltzeiten. Die elektrische Verbindung zwischen Ventilblock 60 und Steuereinrichtung 20 kann über einen zentralen Elektroanschluß am Ventilblock 60 erfolgen. Ins Fahrerhaus zum Schalthebel 16 hin führen keine Pneumatikleitungen mehr und pneumatische Ventile am Schalthebel 16 können entfallen. Ein bisher notwendiges Magnetventil für die Gruppensperre kann entfallen und wird von der Programmlogik der Steuereinrichtung 20 übernommen. Der Ventilblock 60 kann an ein bestehendes Getriebe angeschlossen werden, ohne daß konstruktive Änderungen des Getriebes erforderlich sind. Der Gassensperrzylinder 54 wird unmittelbar neben den Ventilblock 60 angeordnet, so daß auch hier kurze Leitungslängen vorgesehen sind.

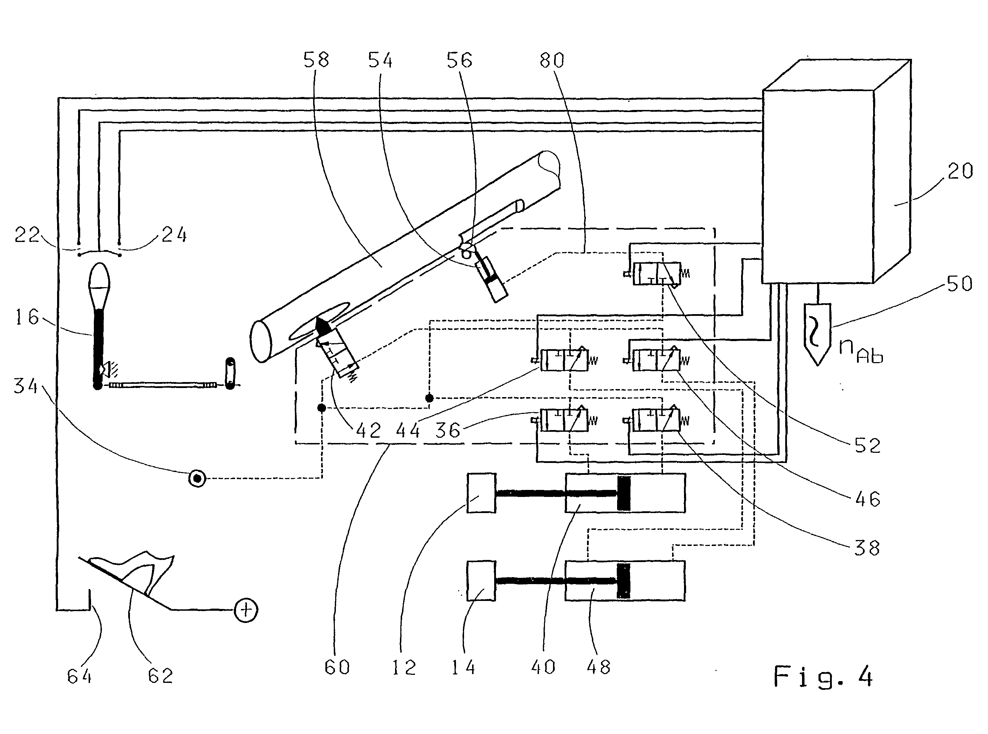

Die Fig. 4 zeigt eine Abwandlung der Anordnung nach Fig. 3. Hier ist der Gassensperrzylinder 54 ebenfalls in den Ventilblock integriert und damit die Modularität und Komplexität des Ventilblocks 60 noch erhöht. Das Kupplungspedal 62 betätigt hier einen elektrischen Schalter 64, der mit der Steuereinrichtung 20 verbunden ist. Die Zulassung von Schaltungen im Splitgruppengetriebe 12 wird in dieser Anordnung von der Steuereinrichtung 20 aus bei geschlossenem Schalter 64 bestimmt, wobei an den Ventilen 36 und 38 Luft permanent ansteht.

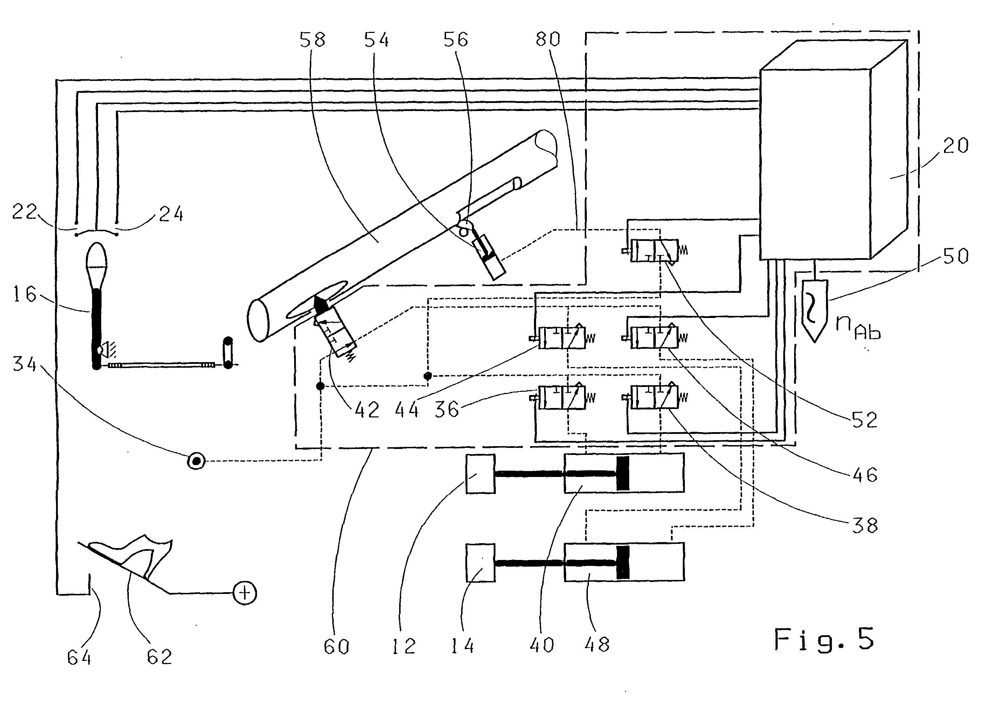

Die Fig. 5 zeigt eine Abwandlung der Anordnung nach Fig. 4. In das Ventilmodul 60 ist die Steuereinrichtung 20 integriert, beispielsweise in den Deckel des Gehäuses.

In der Fig. 6 ist eine Ausführungsform gezeigt, in der die Ventile 36, 38 für das Splitgruppengetriebe, die Ventile 44 und 46 für das Bereichsgruppengetriebe und das Ventil 52 für den Gassensperrzylinder 54 direkt von einem Leitrechner 68 des Fahrzeugs angesteuert werden. Die pneumatisch-mechanischen Ventile 42 und 30 zur Freigabe der Vorratsluft entfallen. Die Vorratsluft steht ständig an den Ventilen 36, 38, 44, 46 und 52 an. Neben dem Sensor 50 für die Abtriebsdrehzahl des Getriebes 6 ist im Fahrzeug ein Sensor 70 zur Messung der Drehzahl der Antriebsmaschine 4 und ein Sensor 72 zur Messung der Vorgelegewellendrehzahl im Getriebe 6 vorgesehen, deren Signale an den Leitrechner 68 abgegeben werden. Über einen Sensor 74 wird der Verstellweg der Kupplung 8 erfaßt und an den Leitrechner 68 weitergegeben. Ein Sensor 76 erkennt die Neutrallage der Schaltwelle 58 und gibt die aktuelle Stellung der Schaltwelle 58 an den Leitrechner 68 weiter.
Der Fahrzeugleitrechner 68 entscheidet anhand ihm zur Verfügung stehender Signale aus der Stellung der Kippschalter 22 und 24 am Schalthebel 16, der Schaltstellung der Schaltwelle 58 im manuellen Hauptgetriebeteil 10, den von den Sensoren 50, 70 und 72 erfaßten Drehzahlen und dem vom Sensor 74 erfaßten Verstellweg der Kupplung 8 über die Betätigung der einzelnen Ventile 36, 38, 44, 46 und 52 und führt die Betätigung entsprechend aus. Alle Ventile, der Gassensperrzylinder 54 und der Sensor 76 für die Neutrallageerkennung sind in einem kompakten Ventilblock 60 angeordnet. Ein Hauptabschaltventil zum Sperren der Luft vor dem Durchgang zu den Ventilen 44, 46 der Bereichsgruppenschaltung kann entfallen. Ebenfalls kann ein Kupplungsauslöseventil bzw. ein Kupplungsauslöseschalter entfallen und werden durch die Auswertung der erfaßten Signale ersetzt. Das Getriebe benötigt für den Ventilblock 60 nur noch einen zentralen Luftanschluß 84. Für den Fahrzeughersteller, der den Einfluß auf den Fahrzeugleitrechner ausüben kann, wird auf diese Weise eine Teilautomatisierung der Schaltung möglich.

Die Fig. 7 zeigt den Aufbau eines Ventilblocks 60 nach der Fig. 3. In dem Ventilblock 60 sind die Ventile 36, 38, 44, 46, 52 und das Hauptabschaltventil 42 angeordnet. Vom Luftvorrat 34 liegt Luft am Ventil 42 und am Ventil 52 an. In der Neutralstellung des mechanischen Hauptgetriebeteils 10 gibt Ventil 42 die Luft zu den Ventilen 44 und 46 frei. Dazu wird das Ventil 42 von der Schaltwelle 58 über einen Stößel 82 mechanisch betätigt. Je nach der elektrischen Ansteuerung von Ventil 44 bzw. Ventil 46 durch die Steuereinrichtung 20 wird die Luft an die jeweilige Kammer des Schaltzylinders 48 durchgelassen. Die jeweils andere Zylinderkammer wird über das jeweils andere Ventil über den Anschluß 78 entlüftet. Das Ventil 52 gibt bei entsprechender Ansteuerung durch die Steuereinrichtung 20 Luft über die Leitung 80 an den Gassensperrzylinder 54 ab.
Über die Leitung 32 gelangt Luft vom Kupplungsauslöseventil 30 zu den Ventilen 36 und 38. Je nach der elektrischen Ansteuerung von Ventil 36 bzw. Ventil 38 durch die Steuereinrichtung 20 wird die Luft an die jeweilige Kammer des Schaltzylinders 40 durchgelassen. Die jeweils andere Zylinderkammer wird über das jeweils andere Ventil über den Anschluß 78 entlüftet. Bei Aufbau des Ventilblocks nach Fig. 4 muß die Vorratsluft zusätzlich an den Ventilen 36 und 38 anstehen. Dies kann beispielsweise dadurch geschehen, daß die Leitung 32 intern im Ventilblock mit der vorratsleitung 34 verbunden und nach außen verschlossen wird.

Die Fig. 8 zeigt den Aufbau eines Ventilblocks nach der Fig. 6. In dem Ventilblock 60 sind die Ventile 36, 38, 44, 46, 52 und der Gassensperrzylinder 54 angeordnet. Vom Luftvorrat 34 liegt Luft an den Ventilen 36, 38, 44, 46 und 52 an. Je nach der elektrischen Ansteuerung von Ventil 44 bzw. Ventil 46 durch den Fahrzeugleitrechner 68 wird die Luft an die jeweilige Kammer des Schaltzylinders 48 durchgelassen. Je nach der elektrischen Ansteuerung von Ventil 36 bzw. Ventil 38 durch den Fahrzeugleitrechner 60 wird die Luft an die jeweilige Kammer des Schaltzylinders 40 durchgelassen. In beiden Fällen wir die jeweils andere Zylinderkammer über das jeweils andere Ventil über den Anschluß 78 entlüftet. Das Ventil 52 gibt bei entsprechender Ansteuerung durch den Fahrzeugleitrechner 60 Luft an den Gassensperrzylinder 54 ab, der über seinen Stößel 56 in die hier nicht gezeigte Schaltwelle zur Arretierung eingreift.
Gegenüber der Anordnung nach Fig. 7 wird in Fig. 8 der Bauraum für das Hauptabschaltventil 42 durch den Gassensperrzylinder 54 eingenommen. Die Führung der Luftkanäle und die Anzahl der Luftanschlüsse im Ventilblock 60 ändern sich und in Fig. 8 verbleibt nur ein einziger Luftanschluß 84. Die elektro-pneumatischen Teile, wie ein einziger, die Leitungen zusammenfassender Elektroanschluß 86, und die Ventile, sowie die Anordnung dieser Teile, sind in beiden Varianten unverändert.

### Bezugszeichen

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 30: Kupplungsauslöseventil
- 32: Leitung
- 34: Luftvorrat
- 36: Ventil
- 38: Ventil
- 40: Schaltzylinder
- 42: Hauptabschaltventil
- 44: Ventil
- 46: Ventil
- 48: Schaltzylinder
- 50: Sensor
- 52: Ventil
- 54: Gassensperrzylinder
- 56: Umlenkhebel
- 58: Schaltwelle
- 60: Ventilblock
- 62: Kupplungspedal
- 64: Schalter
- 68: Fahrzeugleitrechner
- 70: Sensor
- 72: Sensor
- 74: Sensor
- 76: Sensor
- 78: Anschluß
- 80: Leitung
- 82: Stößel
- 84: Luftanschluß
- 86: Elektroanschluß

## Patentansprüche

1. Elektro-pneumatische Schalteinheit für ein Fahrzeuggetriebe (6) mit einem über Ventile (36, 38) pneumatisch geschalteten Splitgruppengetriebe (12) und einem über Ventile (44, 46) pneumatisch geschalteten Bereichsgruppengetriebe (14), deren Schaltungen manuell vom Fahrzeugführer an einem Schalthebel (16) vorwählbar sind, mit einer Sperreinrichtung (54, 56) zur mechanischen Unterbindung der manuellen Schaltung nicht zulässiger Übersetzungsverhältnisse des Fahrzeuggetriebes (6), mit einer Einrichtung (30, 42, 64, 76) zur Unterbindung der pneumatischen Schaltung nicht zulässiger Übersetzungsverhältnisse des Fahrzeuggetriebes (6) und mit einer elektronischen Steuereinrichtung (20, 68), **dadurch gekennzeichnet, daß** die Ventile (36, 38) des Splitgruppengetriebes (12) und die Ventile (44, 46) des Bereichsgruppengetriebes (14) elektromagnetisch betätigte Pneumatikventile sind, die in einem gemeinsamen Gehäuse (60) angeordnet sind, deren Vorwahl durch mit der Steuereinrichtung (20, 68) verbundene elektrische Schalter (22, 24) am Schalthebel (16) erfolgt und die durch Signale der elektronischen Steuereinrichtung (20, 68) betätigt werden und die gemeinsam mit der Einrichtung (42, 76) zur Unterbindung der pneumatischen Schaltung nicht zulässiger Übersetzungsverhältnisse und der Sperreinrichtung (54) zur mechanischen Unterbindung der manuellen Schaltung nicht zulässiger Übersetzungsverhältnisse in dem gemeinsamen Gehäuse (60) integriert angeordnet sind.

2. Elektro-pneumatische Schalteinheit nach Anspruch 1, **dadurch gekennzeichnet, daß** die Aufhebung der Sperrwirkung der Einrichtung zur Unterbindung der pneumatischen Schaltung nicht zulässiger Übersetzungsverhältnisse des Fahrzeuggetriebes (6) durch ein pneumatisches Ventil (30) am manuell betätigten Kupplungspedal (62) ausgelöst wird.

3. Elektro-pneumatische Schalteinheit nach Anspruch 1, **dadurch gekennzeichnet, daß** die Aufhebung der Sperrwirkung der Einrichtung zur Unterbindung der pneumatischen Schaltung nicht zulässiger Übersetzungsverhältnisse des Fahrzeuggetriebes (6) durch einen elektrischen Schalter (64) am manuell betätigten Kupplungspedal (62) ausgelöst wird.

4. Elektro-pneumatische Schalteinheit nach einem der Ansprüche 1 bis 3, **dadurch gekennzeichnet, daß** Sensoren (76) zur Aufnahme der Neutralstellung des manuell betätigbaren Teils (10) der Schaltung, Sensoren (74) zur Feststellung eines Kupplungsverstellweges einer zwischen einer Antriebsmaschine (4) des Fahrzeuges (2) und dem Getriebe (6) angeordneten Kupplung (8), Sensoren (50, 70, 72) zu Feststellung von Drehzahlen der Antriebsmaschine (4), des Fahrzeuggetriebes (6) und der Geschwindigkeit des Fahrzeugs (2) und Sensoren (22, 24) zur Feststellung einer Auslösung einer pneumatischen Schaltung von Splitgruppengetriebe (12) oder Bereichsgruppengetriebe (14) vorgesehen sind, deren Signale an die elektronische Steuereinrichtung (20, 68) übertragen werden.

5. Elektro-pneumatische Schalteinheit nach einem der Ansprüche 1 bis 4, **dadurch gekennzeichnet, daß** die elektronische Steuereinrichtung (20) in das gemeinsame Gehäuse (60) integriert ist.

6. Elektro-pneumatische Schalteinheit nach einem der Ansprüche 1 bis 4, **dadurch gekennzeichnet, daß** die elektronische Steuereinrichtung Bestandteil eines Fahrzeugleitrechnersystems (68) für das ganze Fahrzeug (2) ist.

7. Elektro-pneumatische Schalteinheit nach wenigstens einem der Ansprüche 1 bis 6, **dadurch gekennzeichnet, daß** das gemeinsame Gehäuse (60) nur einen Luftanschluß (84) und einen Elektroanschluß (86) aufweist.

## Claims

1. The invention relates to an electropneumatic switching unit for a vehicle transmission (6) comprising a splitter unit (12) pneumatically controlled by valves (36, 38) and a range unit (14) pneumatically controlled by valves (44, 46), the gearshifts of which can be manually preselected by the driver operating a shift lever (16); with the switching unit being provided with a locking device (54, 56) mechanically blocking manual shifts of impermissible gear ratios of the vehicle transmission (6), and with a device (30, 42, 64, 76) blocking pneumatic shifts of impermissible gear ratios of the vehicle transmission (6), and with an electronic control unit (20, 68), **characterized in that** the valves (36, 38) of the splitter unit (12) and the valves of the range unit (14) are electromagnetically actuated pneumatic valves arranged in a common housing (60). Their preselection is effected by means of electric switches (22, 24) on the shift lever (16), with the switches being connected to the control unit (20, 68) and actuated by the signals of the electronic control unit (20, 68) and being integrated in a common housing (60) together with the device (42, 76) blocking pneumatic shifting of impermissible gear ratios and the locking device (54) mechanically blocking manual shifts of impermissible gear ratios.

2. Electropneumatic switching unit according to claim 1, **characterized in that** the locking effect of the device blocking pneumatic shifting of impermissible ratios of the vehicle transmission (6) is cancelled by means of a pneumatic valve (30) on the manually operated clutch pedal (62).

3. Electropneumatic switching unit according to claim 1, **characterized in that** the locking effect of the device blocking pneumatic shifting of impermissible ratios of the vehicle transmissikon (6) is cancelled by means of an electric switch (64) on the manually operated clutch pedal (62).

4. Electropneumatic switching unit according to one of the claims 1 to 3, **characterized in that** various sensors are provided: sensors (76) to pick up the neutral position of the manually operable part (10) of the shifting system; sensors (74) to determine the control travel of a clutch (8) arranged between the driving engine (4) of the vehicle (2) and the transmission (6); sensors (50, 70, 72) to determine the speeds of the driving engine (4), the vehicle transmission (6) and the speed of the vehicle; sensors (22, 24) to determine actuation of a pneumatic gearshift of the splitter unit (12) or the range unit(14), with the sensor signals being transmitted to the electronic control unit (20, 68).

5. Electropneumatic switching unit according to one of the claims 1 to 4, **characterized in that** the electronic control unit (20) is integrated in the common housing (60).

6. Electropneumatic switching unit according to one of the claims 1 to 4, **characterized in that** the electronic control unit is part of a vehicle master computer system (68) for the entire vehicle (2).

7. Electropneumatic switching unit according to at least one of the claims 1 to 6, **characterized in that** the common housing features only one air connection (84) and one electric connection (86).

## Revendications

1. Unité de commande électro-pneumatique d'une boîte de vitesses pour un véhicule automobile (6) dotée d'un doubleur de gamme (12) piloté par voie pneumatique au moyen de vérins (36, 38) et d'un groupe-relais à train épicycloïdal (14) piloté par voie pneumatique au moyen de vérins (44, 46), dont les changements de vitesses peuvent être présélectionnés manuellement par le conducteur en agissant sur un levier de changement de vitesses (16), et dotée d'un dispositif de verrouillage (54, 56) pour l'inhibition mécanique de changements de vitesses déclenchés manuellement et ayant comme conséquence des rapports de démultiplication inadmissibles dans la boîte de vitesses du véhicule automobile (6), et dotée d'un dispositif (30, 42, 64, 76) pour l'inhibition de changements de vitesses déclenchés par voie pneumatique et ayant comme conséquence des rapports de démultiplication inadmissibles dans la boîte de vitesses du véhicule automobile (6), et dotée d'une unité de commande électronique (20, 68), **caractérisée en ce que** les vérins (36, 38) du doubleur de gamme (12) et les vérins (44, 46) du groupe-relais (14) sont des vérins pneumatiques actionnés par voie électromagnétique et disposés dans un carter commun (60), et dont la présélection est effectuée au moyen de contacteurs électriques (22, 24) connectés à l'unité de commande (20, 68) et montés sur le levier de changement de vitesses (16), et qui sont actionnés par des signaux émis par l'unité de commande électronique (20, 68), et qui sont intégrés et disposés - ensemble avec le dispositif (42, 76) pour l'inhibition de changements de vitesses déclenchés par voie pneumatique et ayant comme conséquence des rapports de démultiplication inadmissibles et le dispositif de verrouillage (54) pour l'inhibition mécanique de changements de vitesses déclenchés manuellement et ayant comme conséquence des rapports de démultiplication inadmissibles - dans un carter commun (60).

2. Unité de commande électro-pneumatique selon la revendication 1, **caractérisée en ce que** la neutralisation de l'effet de verrouillage du dispositif pour l'inhibition de changements de vitesses déclenchés par voie pneumatique et ayant comme conséquence des rapports de démultiplication inadmissibles dans la boîte de vitesses du véhicule automobile (6) est déclenchée par un vérin pneumatique (30) situé sur la pédale d'embrayage (62) à actionnement manuel.

3. Unité de commande électro-pneumatique selon la revendication 1, **caractérisée en ce que** la neutralisation de l'effet de verrouillage du dispositif pour l'inhibition de changements de vitesses déclenchés par voie pneumatique et ayant comme conséquence des rapports de démultiplication inadmissibles dans la boîte de vitesses du véhicule automobile (6) est déclenchée par un interrupteur électrique (64) situé sur la pédale d'embrayage (62) à actionnement manuel.

4. Unité de commande électro-pneumatique selon une des revendications 1 à 3, **caractérisée en ce que** sont prévus des capteurs (76) pour l'enregistrement de la position de point mort de la partie de la commande qui peut être actionnée manuellement (10), des capteurs (74) pour la détermination de la course de réglage d'un embrayage (8) disposé entre le moteur de commande (4) du véhicule (2) et la boîte de vitesses (6), des capteurs (50, 70, 72) pour la détermination des régimes du moteur de commande (4), de la boîte de vitesses pour véhicule automobile (6) et de la vitesse de déplacement du véhicule (2), et des capteurs (22, 24) pour la détection du déclenchement d'une commutation pneumatique du doubleur de gamme (12) ou du groupe-relais (14), dont les signaux sont transmis à l'unité de commande électronique (20, 68).

5. Unité de commande électro-pneumatique selon une des revendications 1 à 4, **caractérisée en ce que** l'unité de commande électronique (20) est intégrée dans le carter commun (60).

6. Unité de commande électro-pneumatique selon une des revendications 1 à 4, **caractérisée en ce que** l'unité de commande électronique est une partie intégrante d'un système de calculateur de conduite du véhicule (68) pour la gestion du véhicule complet (2).

7. Unité de commande électro-pneumatique selon au moins une des revendications 1 à 6, **caractérisée en ce que** le carter commun (60) ne comporte qu'un raccord pneumatique (84) et un raccord électrique (86).
